(19) Europäisches Patentamt
European Patent Office
Office européen des brevets

(11) EP 0 555 148 B1

(12) # FASCICULE DE BREVET EUROPEEN

(45) Date de publication et mention de la délivrance du brevet:
**12.06.1996 Bulletin 1996/24**

(51) Int Cl.[6]: **G01V 1/02**, G01V 13/00

(21) Numéro de dépôt: **93400282.5**

(22) Date de dépôt: **04.02.1993**

(54) **Procédé pour déterminer une signature en champ lointain d'une pluralité de sources sismiques**

Verfahren zur Bestimmung der Fernfeldsignatur einer Anzahl seismischer Quellen

Process for determining the far-field signature of a plurality of seismic sources

(84) Etats contractants désignés:
**FR GB NL**

(30) Priorité: **06.02.1992 FR 9201343**

(43) Date de publication de la demande:
**11.08.1993 Bulletin 1993/32**

(73) Titulaire: **COMPAGNIE GENERALE DE GEOPHYSIQUE**
**F-91341 Massy Cédex (FR)**

(72) Inventeur: **Regnault, Alain**
**F-92160 Antony (FR)**

(74) Mandataire: **Schrimpf, Robert**
**Cabinet Regimbeau**
**26, Avenue Kléber**
**F-75116 Paris (FR)**

(56) Documents cités:
**EP-A- 0 400 769** **US-A- 4 658 384**

- **GEOPHYSICAL PROSPECTING vol. 26, 1978, THE HAGUE NL pages 194 - 201 J.J. NOOTEBOOM 'Signature and amplitude of linear airgun arrays'**

EP 0 555 148 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention concerne un procédé pour déterminer une signature FF(t) en champ lointain d'une pluralité de N sources sismiques Si (i= 1, ..., N).

L'invention trouve une application particulièrement avantageuse dans le domaine de la prospection géophysique par sismique marine.

L'exploration géologique des fonds marins utilise généralement des navires remorquant des dispositifs d'émission acoustique qui émettent vers les fonds à explorer des ondes acoustiques dans différentes directions. Ces ondes acoustiques sont ensuite réfléchies par le sous-sol marin et détectées par des transducteurs disposés le long de câbles, appelés flûtes sismiques, tirés également par le navire de prospection. L'analyse des ondes réfléchies par rapport aux ondes émises par les sources renseigne sur la structure, la nature et la composition des fonds étudiés.

Les dispositifs d'émission acoustique mis en oeuvre en sismique marine constituent le plus souvent des sous-ensembles de sources immergés, ou canons, formant un réseau régulier de une à trois dimensions. Pour émettre une onde acoustique dans une direction donnée, on commande l'émission des sources selon une loi de phase qui régit les retards de phase à appliquer aux sources. En particulier, pour émettre dans ces conditions une onde dans la direction verticale, perpendiculaire à la surface de l'eau, la loi de phase nominale est uniforme en ce sens que l'émission des sources se fait en même temps.

De façon à pouvoir contrôler que l'émission de l'onde acoustique incidente s'est effectuée sans anomalies, et également pour apporter d'éventuelles corrections aux signaux enregistrés par les hydrophones des flûtes sismiques, il est nécessaire, à chaque tir des canons, de disposer d'un signal de référence, représentatif de l'onde acoustique telle qu'elle est reçue à grande distance par les structures géologiques à étudier. Ce signal de référence est appelé signature en champ lointain et noté FF(t).

De façon pratique et lorsque cela est possible, la signature en champ lointain du système de sources sismiques est mesurée directement en immergeant à une profondeur pouvant atteindre 1000 m un hydrophone situé à l'aplomb du réseau des N sources sismiques.

Toutefois, lorsque la prospection géologique concerne des plateaux continentaux situés à faible profondeur, 200 à 300 m par exemple, il n'est plus possible d'acquérir la signature en champ lointain par simple mesure directe. On a alors recours à des méthodes indirectes, telles que celle décrite dans la demande de brevet européen n° 0 400 769, qui consistent généralement à reconstituer une signature en champ lointain à partir de la mesure d'une signature en champ proche NFi(t) de chaque source sismique Si. Dans ce but, un hydrophone est associé à chaque canon, et le signal détecté par ledit hydrophone constitue la signature en champ proche de l'émetteur correspondant.

Pour passer des signatures en champ proche NFi(t) à la signature en champ lointain FF(t), les procédés connus appliquent des algorithmes de correction à chaque signature en champ proche puis effectuent une sommation des signatures en champ proche ainsi corrigées.

Toutefois, ce type de procédé présente l'inconvénient de mettre en oeuvre des algorithmes théoriques reposant sur un certain nombre d'hypothèses qui, souvent mal maîtrisées, jettent un doute sur la précision du résultat obtenu. De plus, le traitement des données brutes, à savoir les signatures en champ proche, exige des temps de calcul relativement longs et l'emploi d'ordinateurs puissants.

Aussi, le problème technique à résoudre par l'objet de la présente invention est de proposer un procédé pour déterminer une signature FF(t) en champ lointain d'une pluralité de N sources sismiques Si (i= 1, ..., N), comprenant une étape de mesure d'une signature NFi(t) en champ proche de chaque source Si, procédé qui serait de mise en oeuvre beaucoup plus simple que les procédés connus et qui conduirait à des résultats plus sûrs.

La solution au problème technique posé est, selon l'invention, remarquable en ce que ledit procédé comprend les opérations consistant respectivement :

- dans une étape préalable, à mesurer simultanément une signature NFio(t) en champ proche initiale de chaque source sismique Si et une signature FFo(t) en champ lointain initiale de la pluralité des N sources sismiques,
- à déterminer un opérateur de passage G vérifiant le produit de convolution

$$\sum_{i=1}^{N} NFio(t) * G = FFo(t)$$

où G est défini par p + 1 valeurs ($g_o$, $g_1$, ..., $g_p$) et est calculé de façon que la somme :

$$\sum_{j=0}^{N} [nf * g)_j - ff_j]^2$$

soit minimum,
où ($nf_o$, $nf_1$, ..., $nf_m$) sont les valeurs d'échantillonnage sur m + 1 valeurs de la somme

$$Nf_o(t) = \sum_{i=1}^{N} NFio(t)$$

($ff_o$, $ff_1$, ..., $ff_n$) sont les valeurs d'échantillonnage en champ lointain de la signature initiale FFo (t)
où n, m et p sont des entiers,

- à chaque tir des N sources sismiques Si, à réaliser ladite étape de mesure des signatures NFi(t) en champ proche,
- à déterminer ladite signature FF(t) en champ lointain par la relation

$$FF(t) = \sum_{i=1}^{N} NFi(t) * G$$

Ainsi, le procédé selon l'invention repose sur la seule hypothèse, bien vérifiée au demeurant, de la linéarité de la relation entre la signature en champ lointain et les signatures en champ proche. Il n'est pas nécessaire en particulier de faire appel à des modèles théoriques dont la validité n'est pas toujours assurée. D'autre part, l'opérateur de passage G étant déterminé une fois pour toutes à la suite de l'étape préalable, le calcul de la signature en champ lointain cherchée en fonction des signatures en champ proche peut être effectué dans un temps beaucoup plus court qu'avec les procédures connues.

La description qui va suivre en regard du dessin annexé, donné à titre d'exemple non limitatif, fera bien comprendre en quoi consiste l'invention et comment elle peut être réalisée.

La figure 1 est une vue schématique en coupe d'un ensemble de prospection par sismique marine utilisant un procédé conforme à l'invention.

L'ensemble de prospection montré sur la figure 1 comprend un navire 100 remorquant au moins une flûte sismique 200 de grande longueur, 3 kilomètres par exemple, le long de laquelle sont disposés des capteurs acoustiques, non représentés, destinés à enregistrer l'onde réfléchie par le fond marin 300 étudié, en réponse à une onde acoustique incidente émise par un réseau 400 comportant une pluralité de N sources sismiques Si, avec i=1, ..., N.

De manière à déterminer une signature en champ lointain FF(t) de ces sources, un hydrophone Hi est associé à chacune desdites sources afin de mesurer, à chaque tir, une signature en champ proche de la source considérée.

Dans une étape préalable, réalisée au cours d'une campagne de prospection où la mesure directe du champ lointain est possible, une signature NFio(t) en champ proche initiale est enregistrée pour chaque source, tandis qu'un hydrophone Ho, immergé à une grande profondeur, fournit une signature FFo(t) en champ lointain initiale.

On détermine ensuite un oDérateur de passage G reliant la somme

$$\sum_{i=1}^{N} NFio(t)$$

des signatures en champ proche initiales à la signature FFo(t) par le produit de convolution :

$$\sum_{i=1}^{N} NFio(t) * G = FFo(t)$$

L'opérateur de passage G peut être déterminée de la façon suivante.

La somme

$$NFo(t) = \sum_{i=1}^{N} NFio(t)$$

est échantillonnée sur m+1 valeurs :

$$NFo(t) = (nf_o, nf_1, ..., nf_m).$$

De même, la signature FFo(t) en champ lointain initiale est échantillonnée sur n+ 1 valeurs :

$$FFo(t) = (ff_o, ff_1, ..., ff_n).$$

L'opérateur G cherché est lui-même défini par p+1 valeurs :

$$G = (g_o, g_1, ... g_p).$$

La méthode de calcul des coefficients de G consiste à rendre le produit NFo(t) voisin de FFo(t) au sens des moindres carrés.

Le problème revient alors à trouver G tel que :

$$\sum_{j=0}^{N} [(nf*g)_j - ff_j]^2$$

soit minimum.

En developpant et en dérivant par rapport aux inconnus $g_k$, on obtient les p équations suivantes :

$$\left\{\begin{array}{l} A_0 g_0 + A_1 g_1 + .... + A_p g_p = C_0 \\ A_1 g_0 k + A_0 g_1 + .... + A_{p-1} g_p = C_1 \\ ------------------------ \\ A_p g_0 + A_{p-1} g_1 + .... + A_0 g_p = C_p \end{array}\right. \qquad (\Gamma)$$

avec

$$A_k = \sum_{q=0}^{m} nf_q \; nf_{q+k}$$

$$C_k = \sum_{q=o}^{m} nf_q \; ff_{q+k}$$

(Γ) est un système de Toeplitz, se résolvant par l'algorithme de Wiener-Lewison avec second membre.

De façon à limiter l'amplification du bruit, on peut introduire un coefficient $\varepsilon^2$ de pondération. Dans ce cas, le minimum recherché est celui de :

$$\sum_{j=0}^{n} [nfg)_j - ff_j]^2 + \varepsilon^2 \sum_{j=0}^{n} g_j^2$$

Le système d'équation auquel on aboutit est analogue à (Γ) si ce n'est que le coefficient $A_0$ est remplacé par $A_0 + \varepsilon^2$.

L'opérateur de passage G étant ainsi déterminé pour une configuration d'émetteurs donnée, le procédé conforme à l'invention consiste alors à réaliser, lors de la campagne de prospection considérée, pour chaque tir des N sources sismiques $S_i$, la mesure des signatures NFi(t) en champ proche de chaque source, et à déterminer la signature FF(t) en champ lointain par la relation :

$$FF(t) = \sum_{i=1}^{N} NF_i(t) * G$$

On dispose de la sorte d'un moyen de contrôle du système de sources. En effet, en cas d'anomalie, telle qu'un mauvais fonctionnement d'une source ou une déformation de la géométrie du réseau, la signature en champ lointain aura une allure différente de celle préalablement définie, ce qui provoquerait la non-validation du tir correspondant.

La signature en champ lointain est également utilisée pour ramener les signaux détectés par les capteurs situés dans les flûtes à des signaux de phase minimale.

**Revendications**

1. Procédé pour déterminer une signature FF(t) en champ lointain d'une pluralité de N sources sismiques Si (i=1, ..., N), comprenant une étape de mesure d'une signature NFi(t) en champ proche de chaque source sismique Si, caractérisé en ce que ledit procédé comprend les opérations consistant respectivement :

   - dans une étape préalable, à mesurer simultanément une signature NFio(t) en champ proche initiale de chaque source sismique Si et une signature FFo(t) en champ lointain initiale de la pluralité des N sources sismiques,
   - à déterminer un opérateur de passage G vérifiant le produit de convolution

   $$\sum_{i=1}^{N} NFio(t) * G = FFo(t)$$

   où G est défini par p + 1 valeurs ($g_o$, $g_1$, ..., $g_p$) et est calculé de façon que la somme :

   $$\sum_{j=0}^{N} [nf * g)_j - ff_j]^2$$

   soit minimum,
   où ($nf_o$, $nf_1$, ..., $nf_m$) sont les valeurs d'échantillonnage sur m + 1 valeurs de la somme

   $$Nf_o(t) = \sum_{i=1}^{N} NFio(t)$$

   ($ff_o$, $ff_1$, ..., $ff_n$) sont les valeurs d'échantillonnage en champ lointain de la signature initiale FFo (t) où n, m et p sont des entiers,
   - à chaque tir des N sources sismiques Si, à réaliser ladite étape de mesure des signatures NFi(t) en champ proche,
   - à déterminer ladite signature FF(t) en champ lointain par la relation

   $$FF(t) = \sum_{i=1}^{N} NFi(t) * G$$

**Patentansprüche**

1. Verfahren zum Bestimmen einer Fernfeldsignatur FF(t) einer Mehrzahl von N seismischen Quellen Si (i=1, ..., N), welches den Schritt des Messens einer Nahfeldsignatur NFi(t) jeder seismischen Quelle Si umfaßt, dadurch **gekennzeichnet**, daß das Verfahren die folgenden Maßnahmen umfaßt:

   - gleichzeitiges Messen einer Anfangs-Nahfeldsignatur NFio(t) jeder seismischen Quelle Si und einer Anfangs-Fernfeldsignatur FFo(t) der Mehrzahl der N seismischen Quellen in einem vorgelagerten Schritt,
   - Bestimmen eines Propagationsoperators G, welcher das Faltungsprodukt

   $$\sum_{i=1}^{N} NFio(t) * G = FFo(t)$$

   erfüllt, wobei G durch p + 1 Werte ($g_0$, $g_1$, ..., $g_p$) festgelegt ist und derart berechnet wird, daß die Summe

$$\sum_{j=0}^{N} [nf * g)_j - ff_j]^2$$

minimal ist, wobei ($nf_0$, $nf_1$, ..., $nf_m$) Stichprobenwerte von m + 1 Werten der Summe

$$Nf_o(t) = \sum_{i=1}^{N} NFio(t)$$

($ff_0$, $ff_1$, ..., $ff_n$) Fernfeld-Stichprobenwerte der Anfangssignatur FFo(t) und n, m und p ganze Zahlen sind,

- Realisieren des Schritts des Messens der Nahfeldsignaturen NFi(t) bei jedem Abschuß der N seismischen Quellen Si und
- Bestimmen der Fernfeldsignatur FF(t) durch die Relation

$$FF(t) = \sum_{i=1}^{N} NFi(t) * G$$

**Claims**

1. Method for determining a far-field signature FF(t) of a plurality of N seismic sources Si (i=1, ..., N) comprising a stage of measuring a near-field signature NFi(t) of each seismic source Si characterised in that said method comprises the following operations:

- in a preliminary stage measuring simultaneously an initial near-field signature NFio(t) of each seismic source Si and an initial far-field signature FFo(t) of the plurality of N seismic sources,
- determining an operator G defined by the convolution integral

$$\sum_{i=1}^{N} NFio(t) * G = FFo(t)$$

where G is defined by p+1 values ($g_o$, $g_1$, ..., $g_p$) and is calculated to minimise the sum:

$$\sum_{j=0}^{N} [nf*g)_j - ff_j]^2$$

where ($nf_o$, $nf_1$, ..., $nf_m$) are the values of sampling on m+1 values the sum

$$Nf_O(t) = \sum_{i=1}^{N} NFio(t)$$

($ff_o$, $ff_1$, ..., $ff_n$) are the values of far field sampling of the initial signature FFo(t)
where n, m and p are integers,

- on each firing of the N seismic sources Si, carrying out said near-field signature NFi(t) measuring stage,
- determining said far-field signature FF(t) from the equation

$$FF(t) = \sum_{i=1}^{N} NFi(t) * G$$

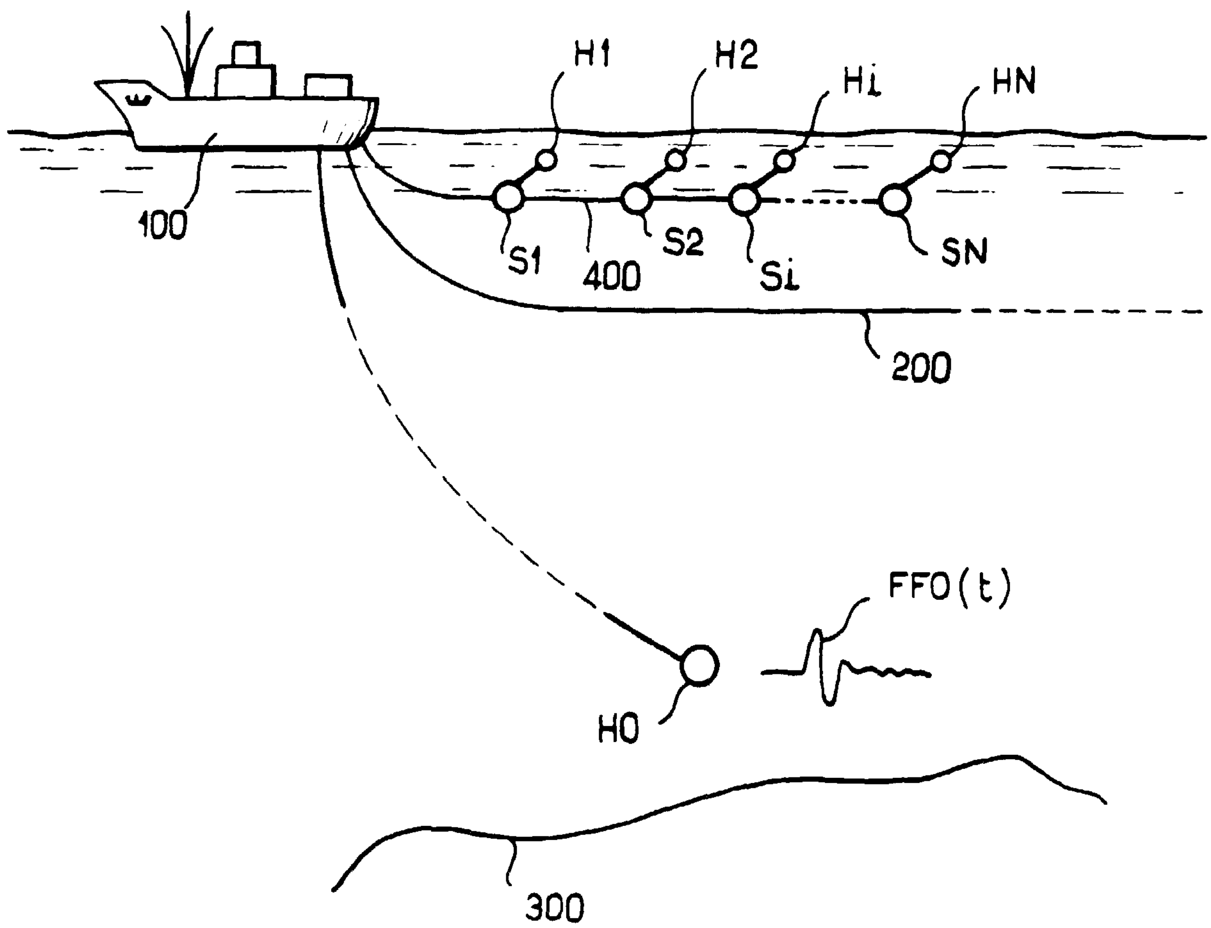


FIG.1